# EUROPÄISCHE PATENTANMELDUNG

(11) **EP 3 790 173 A1**
(43) Veröffentlichungstag der Anmeldung: **10.03.2021**
(21) Anmeldenummer: 20195351.0
(22) Anmeldetag: 09.09.2020
(51) Int. Cl.: H02K 7/102, H02K 7/116, H02K 7/14, H02K 11/21

(54) **STELLANTRIEB UND VERFAHREN ZUR ANSTEUERUNG EINER BREMSE EINES STELLANTRIEBS**

(30) Priorität: 09.09.2019 DE 102019124149
(71) Anmelder: AUMA Riester GmbH & Co. KG, 79379 Müllheim (DE)
(72) Erfinder: ACHINGER, Robert, 90491 Nürnberg (DE); MORLANG, Rudolf, 78052 Villingen-Schwenningen (DE); FICHTE, Vladimir, 90451 Nürnberg (DE)
(74) Vertreter: Mertzlufft-Paufler, Cornelius

(57) **Zusammenfassung**

Die Erfindung betrifft einen Stellantrieb (1) mit einem Baukasten zur Ausbildung eines Steckgetriebes (3), wobei der Baukasten wenigstens ein Abtriebsrad (5) und wenigstens ein Steckelement (7,8,9,10) aufweist, wobei durch den Baukasten ein Steckgetriebe (3) mit einer bis fünf Stufen ausbildbar

## Beschreibung

Die Erfindung betrifft einen Stellantrieb mit einem Motor beispielsweise zur Regelung einer Stellung eines Ventils. Vorzugsweise kann es sich bei dem Motor um einen Synchronmotor, beispielsweise einen Servomotor, handeln.

Stellantriebe eingangs genannter Art sind bekannt. Die Drehzahlen der Motoren, wie zum Beispiel der Synchronmotoren, derartiger Stellantriebe können zwar häufig gesteuert werden, jedoch hat sich gezeigt, dass die Motoren häufig nicht in ihrem optimalen Arbeitsbereich laufen. Somit kann bei Motoren vorbekannter Stellantriebe eingangs genannter Art bei wechselnden einzustellenden Drehzahlen häufig ein schlechter Wirkungsgrad vorliegen.

Es besteht somit die Aufgabe, die Gebrauchseigenschaften von Stellantrieben eingangs genannter Art zu verbessern.

Die Lösung dieser Aufgabe wird erfindungsgemäß durch einen Stellantrieb mit den Merkmalen aus Anspruch 1 erreicht.

Insbesondere wird erfindungsgemäß zur Lösung der Aufgabe ein Stellantrieb mit einem Motor, insbesondere einem Synchronmotor, und einem Steckgetriebe vorgeschlagen. Somit ist es möglich, durch das Steckgetriebe derartige Übersetzungsverhältnisse auszubilden, um eine gewünschte Drehzahl an einem Abtriebsrad und/oder an einer Abtriebswelle, vorzugswiese bei gleichbleibenden Drehzahlen einer Motorwelle und/oder bei Drehzahlen einer Motorwelle, die innerhalb eines optimalen Arbeitsbereichs des Motors liegen, einzurichten. Damit kann der Wirkungsgrad des Motors verbessert werden.

Das Steckgetriebe kann somit dazu eingerichtet sein, um unterschiedliche Übersetzungsverhältnisse durch ein Baukastensystem wenigstens aus mehreren Steckelementen (mehrstufig) und/oder um einen direkten Antrieb des Abtriebsrads über die Motorwelle (einstufig) einzurichten. Die Erfindung betrifft somit auch ein Baukastensystem zur Herstellung eines Steckgetriebes für einen Stellantrieb. Das Steckgetriebe kann vorzugsweise als ein Zahnradgetriebe ausgebildet sein.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer Weiterbildung kann eine Motorwelle und ein Abtriebsrad des Steckgetriebes relativ zu einander axial verstellbar sein. Durch die axiale Verstellung kann es insbesondere möglich sein, wenigstens zwei unterschiedliche Stellungen einzurichten. Somit ist eine Lösung bereitgestellt, durch welche sehr flexibel und bedarfsgerecht sowie durch wenig Aufwand ein gewünschtes Übersetzungsverhältnis über das Steckgetriebe einrichtbar ist, um ein erforderliches Abtriebsmoment an einem Abtriebsrad einstellen zu können.

Gemäß einer bevorzugten Weiterbildung kann in wenigstens einer Stellung Platz zwischen der Motorwelle und dem Abtriebsrad für wenigstens ein Steckelement vorliegen. Diese Stellung kann insbesondere durch die zuvor genannte axiale Relativverstellung zwischen der Motorwelle und dem Abtriebsrad erreicht werden. Zudem ist es dadurch möglich, eine besonders platzsparende Anordnung der Getriebeteile zu erreichen, so dass der Bauraum für das Steckgetriebe insgesamt möglichst gering gehalten werden kann. Zudem kann die erforderliche Teileanzahl auf ein Minimum reduziert werden. Allgemein kann gesagt werden, dass durch den einrichtbaren Platz zwischen der Motorwelle und dem Abtriebsrad in besonders einfacher Weise mehrstufige Steckgetriebe herstellbar sind, ohne dass es zu einer baulichen Änderung des Grundaufbaus des Stellantriebes kommen muss. Vielmehr ist es möglich, lediglich durch die Verwendung weiterer Bauteile, insbesondere wenigstens eines weiteren Steckelements, die Gebrauchseigenschaften des Steckgetriebes an die erforderlichen Bedingungen anzupassen. Insbesondere können somit Steckelemente mit unterschiedlichen Größen (insbesondere Durchmessern) verbaut sein, um unterschiedliche Übersetzungen einzurichten.

Gemäß einer weiteren vorteilhaften Ausgestaltung kann das wenigstens eine Steckelement auf wenigstens einem Bolzen, vorzugsweise auf wenigstens einem fest vormontierten Bolzen, befestigbar oder in Gebrauchsstellung befestigt sein. Das Steckelement kann wenigstens ein Zahnrad aufweisen, um eine Kraft- und Drehmomentübertragung auf ein folgendes Steckelement und/oder das Abtriebsrad möglich zu machen. Die Bolzen können dem Nutzer einen gewissen Bauplan eines durch den Nutzer herstellbaren Steckgetriebes vorgeben, wenn diese fest vormontiert sind. Es ist jedoch auch denkbar, dass der Nutzer die Platzierung der Bolzen frei wählen und/oder vormontierte Bolzen entfernen kann. Somit ist eine besonders große Flexibilität bei der Einrichtung unterschiedlicher Übersetzungsverhältnisse möglich, um das gewünschte Abtriebsmoment am Abtriebsrad einzustellen.

Um eine möglichst einfache und ordnungsgemäße Platzierung der Bauteile des Steckgetriebes erreichen zu können, kann das wenigstens eine Steckelement durch zumindest eine Distanzhülse in einer axialen Position entlang eines Bolzens befestigbar oder befestigt sein. Somit ist es für den Nutzer möglich, besonders schnell und einfach eine korrekte Ausrichtung einzelner Steckelemente relativ zueinander und/oder zu der Motorwelle und/oder dem Abtriebsrad vornehmen zu können.

Gemäß einer besonders bevorzugten Ausgestaltung kann es vorgesehen sein, dass wenigstens zwei Steckelemente axial versetzt zueinander angeordnet sind. Die beiden Steckelemente können dabei insbesondere einen gemeinsamen Bolzen und/oder ein gemeinsames Drehzentrum aufweisen oder seitlich versetzt zueinander angeordnet sein. Somit kann der radiale Bauraum des Steckgetriebes vorzugsweise gleichbleiben, wobei gegebenenfalls lediglich in axialer Richtung mehr Bauraum erforderlich ist. Grundsätzlich ist durch die beschriebene Lösung jedoch eine besonders platzsparende Anordnung der Getriebeteile möglich.

Gemäß einer vorteilhaften Weiterbildung können zwischen der Motorwelle und dem Abtriebsrad zwei Steckelemente, insbesondere wenigstens drei Steckelemente, insbesondere wenigstens vier Steckelemente, insbesondere wenigstens fünf Steckelemente, angeordnet sein. Somit ist es möglich, nicht nur zweistufige, sondern drei- und mehrstufige Steckgetriebe einzurichten.

Gemäß einer weiteren vorteilhaften Weiterbildung kann es vorgesehen sein, dass wenigstens ein Steckelement zwei Zahnräder mit unterschiedlichen Durchmessern aufweist. Besonders vorteilhaft kann es dabei sein, wenn das wenigstens eine Steckelement in zwei unterschiedlichen Orientierungen befestigbar ist. Somit können mehrere Übersetzungen mit nur einem Steckelement ausgebildet werden. Bei der Einrichtung des Steckgetriebes kann das Steckelement mit den zwei Zahnrädern daher einfach umgedreht werden, so dass zwei mögliche Orientierungen vorhanden sind. Besonders bevorzugt kann es sein, wenn ein Großteil oder alle Steckelemente jeweils zwei Zahnräder mit unterschiedlichen Durchmessern aufweisen.

Um eine vereinfachte axiale Relativverstellung zwischen der Motorwelle und dem Abtriebsrad ausbilden zu können, kann gemäß einer Weiterbildung vorgesehen sein, dass ein in Umfangsrichtung umlaufender und/oder Zähne aufweisender Kämmbereich der Motorwelle in axialer Richtung länger ausgebildet ist als ein Kämmbereich eines Zahnrades des wenigstens einen Steckelements. Insbesondere kann der Kämmbereich der Motorwelle in axialer Richtung jeweils länger ausgebildet sein als die Kämmbereiche der Zahnräder aller Steckelemente. Bei dieser Ausgestaltung kann daher der für die Getriebeteile erforderliche Bauraum möglichst gering gehalten werden, da lediglich die Motorwelle einen größeren Platzbedarf in axialer Richtung aufweist. Somit ist nach wie vor eine axiale Relativverstellung zwischen der Motorwelle und dem Abtriebsrad möglich. Zudem können auf diese Weise kämmende Zahnräder der Steckelemente an zwei verschiedenen Stellen axial zueinander versetzt mit der Motorwelle kämmen, und so unterschiedliche Kraftflüsse für weitere Steckelemente zu ermöglichen.

Gemäß einer weiteren vorteilhaften Ausgestaltung kann ein Einführbereich der Bolzen wenigstens zwei Bolzeneinführplätze aufweisen, wobei ein Abstand zwischen den Bolzeneinführplätzen kleiner als ein Durchmesser eines kleinsten Zahnrades, insbesondere kleiner als ein Radius eines kleinsten Zahnrades, ist. Dadurch können nicht nur die Steckelemente auf den Bolzen variabel versetzt werden, sondern eine Bolzenposition kann ebenfalls vorgegeben durch einen der Bolzeneinführplätze durch den Nutzer ausgewählt werden. Somit ist es möglich, den zur Ausbildung des Steckgetriebes erforderlichen Bauraum auf ein Minimum zu reduzieren, gleichzeitig jedoch nach wie eine besonders flexible Lösung bereitzustellen, um auf einfache und wenig fehleranfällige Weise unterschiedliche Übersetzungsverhältnisse einrichten zu können.

Gemäß einer vorteilhaften Weiterbildung kann es vorgesehen sein, dass auf wenigstens einem Bolzen wenigstens zwei Steckelemente angeordnet sind. Die Steckelemente können daher axial versetzt direkt nacheinander oder beabstandet zueinander auf einen Bolzen angebracht sein. Somit ist es möglich, auf einfache und platzsparende Weise weitere Stufen des Steckgetriebes ausbilden zu können.

Gemäß einer weiteren vorteilhaften Ausgestaltung kann es sich bei dem Steckgetriebe um ein insbesondere durch einen Nutzer eigens aufbaubares Getriebe handeln, wobei der Nutzer auf einem Baukasten aus unterschiedlichen Getriebeteilen zurückgreifen kann. Der Baukasten kann dabei wenigstens ein Abtriebsrad und wenigstens ein Steckelement aufweisen. Vorzugsweise kann der Baukasten mehrere Steckelemente aufweisen, die gleich oder unterschiedlich aufgebaut sind. Durch die Verwendung gleicher Steckelemente, die vorzugsweise in unterschiedlichen Orientierungen einsetzbar sind, kann eine besonders kostengünstige Fertigung eines Baukastens und/oder eines Steckgetriebes und/oder eines Stellantriebes erreicht werden. Die einzelnen Bauteile des Steckgetriebes können zum Beispiel durch Spritzguss- und/oder Sinter- und/oder Stanzverfahren hergestellt sein. Somit betrifft die Erfindung auch die Verwendung des zuvor beschriebenen Baukastens zur Herstellung eines Stellantriebs und/oder zur Durchführung eines Verfahrens zur Herstellung eines Stellantriebes.

Die Erfindung betrifft zudem einen Stellantrieb mit einem Motor und einer Haltebremse, dadurch gekennzeichnet, dass die Haltebremse auf einer A-Lagerseite des Motors angeordnet ist. Als Haltebremse im Sinne der Erfindung kann eine Sicherheitsbremse verstanden werden, die den Zweck hat, bewegte Massen aus der Bewegung abzubremsen und/oder im Stillstand sicher zu halten.

Bei der Haltebremse kann es sich zum Beispiel um eine Federdruckbremse handeln.

Haltebremsen kennt man bereits, wobei diese an einer sogenannten B-Lagerseite eines Motors, insbesondere eines Elektromotors, angeordnet sind. Die Bremswirkung auf eine abzubremsende Masse, insbesondere eine abzubremsende Welle (Abtriebswelle), bei derartigen Haltebremsen erfolgt somit indirekt, da die Bremswirkung direkt nur auf eine Motorwelle wirkt. Eine mit der Motorwelle verbundene Masse oder abzubremsende Welle (Abtriebswelle) wird daher bei vorbekannten Lösungen nicht direkt durch die Haltebremse abgebremst.

Die zuvor beschriebene Lösung geht einen anderen Weg. Die Haltebremse des Stellantriebs ist auf der A-Lagerseite des Motors angeordnet. Als A-Lagerseite wir die Abtriebsseite des Motors bezeichnet, an welchem die Motorwelle, insbesondere über ein Festlager, gelagert ist und/oder aus dem Motorgehäuse herausragt. Anders ausgedrückt stellt die A-Lagerseite die Seite dar, an welcher eine abzubremsende Welle (Abtriebswelle) angeordnet ist. Die Haltebremse kann daher in einer direkten Wirkverbindung mit der abzubremsenden Welle stehen. Kommt es beispielsweise aufgrund einer Materialermüdung an einer Verbindung zwischen der Motorwelle und der Abtriebswelle zu einem Bruch oder einer sonstigen ungewollten Aufhebung einer Kopplung zwischen Motorwelle und Abtriebswelle, ist es mittels der erfindungsgemäßen Lösung dennoch möglich, die Abtriebswelle abzubremsen. Dies ist mit Haltebremsen an der B-Lagerseite hingegen nicht möglich.

Gemäß einer vorteilhaften Weiterbildung kann es vorgesehen sein, dass die Abtriebswelle mit einer Funktionseinheit, insbesondere mit einem Ventil, in eine Wirkverbindung versetzbar ist oder in Gebrauchsstellung in einer Wirkverbindung steht, so dass eine Kraftübertragung und/oder eine Drehmomentübertragung von der Abtriebswelle auf die Funktionseinheit möglich ist.

Um eine Sicherheitswirkung der Haltbremse einzurichten, kann die Haltebremse im unbestromten Zustand bremsen und im bestromten Zustand lüften. Dabei kann ein Bremsmoment über vorgespannte Federn erzeugt werden. Gelüftet werden, kann die Haltebremse zum Beispiel elektromagnetisch, hydraulisch und/oder pneumatisch. Bei einer bevorzugten Ausgestaltung erfolgt die Belüftung elektromagnetisch. Im energielosen, also unbestromten Zustand ist die Haltebremse geschlossen, so dass gewährleistet ist, dass bei einer Beschädigung der Haltebremse, zum Beispiel an der Energiezuleitung, bei einer Störung oder bei einem Stromausfall das Bremsmoment erhalten bleibt und/oder unvermittelt einsetzt.

Gemäß einer weiteren unabhängigen oder zu den vorherig beschriebenen Lösung ergänzenden Lösung kann es vorgesehen sein, dass der Stellantrieb eine Erfassungseinrichtung zur Bestimmung einer Rotationsgeschwindigkeit einer Abtriebswelle, zum Beispiel der zuvor genannten Abtriebswelle, aufweist, wobei die Haltebremse des Stelleintriebs durch eine Bremssteuerung aktivierbar ist oder aktiviert wird, wenn durch die Erfassungseinrichtung ein Erreichen oder eine Unterschreitung einer Zielrotationsgeschwindigkeit vermeldet wird.

Die Erfindung betrifft weiter ein Verfahren zur Ansteuerung einer Bremse eines Stellantriebes, insbesondere eines Stellantriebes nach einem der vorstehenden Ansprüche, wobei eine durch die Bremse feststellbare Abtriebswelle erst nach einem motorischen Abbremsen der Abtriebswelle bis zu einem Erreichen oder Unterschreiten einer Zielrotationsgeschwindigkeit der Abtriebswelle festgestellt wird. Dadurch kann die durch einen Reibschluss erzeugte Hitzeentwicklung an der Bremse reduziert werden. Somit kann zunächst die Bremskraft des Motors genutzt werden, bevor durch die Bremse eine Bremswirkung erzeugt wird. Dadurch kann der Verschleiß reduziert werden, so dass ein besonders langlebiger und wartungsarmer Stellantrieb ausbildbar ist. Zudem kann die Drehung einer abzubremsenden Masse über den Motor zur Energierückgewinnung verwendet werden. Ein weiterer Vorteil besteht darin, dass die Bremse deutlich kleiner als bei vorbekannten Stellantrieben dimensioniert werden kann, da diese zur Erzeugung von geringeren Bremsmomenten eingerichtet ist. Somit kann insgesamt eine kompaktere Ausgestaltung des gesamten Stellantriebes erreicht werden.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine erste Ausführungsvariante eines erfindungsgemäßen Stellantriebes, wobei im Wesentlichen das Steckgetriebe dargestellt ist, das in der gezeigten Ausführungsvariante einstufig ausgebildet ist,
- Fig. 2: eine zweite Ausführungsvariante eines erfindungsgemäßen Stellantriebes, wobei im Wesentlichen das Steckgetriebe dargestellt ist, das in der gezeigten Ausführungsvariante zweistufig ausgebildet ist,
- Fig. 3: eine dritte Ausführungsvariante eines erfindungsgemäßen Stellantriebes, wobei im Wesentlichen das Steckgetriebe dargestellt ist, das in der gezeigten Ausführungsvariante dreistufig ausgebildet ist,
- Fig. 4: eine vierte Ausführungsvariante eines erfindungsgemäßen Stellantriebes, wobei im Wesentlichen das Steckgetriebe dargestellt ist, das in der gezeigten Ausführungsvariante vierstufig ausgebildet ist,
- Fig. 5: eine fünfte Ausführungsvariante eines erfindungsgemäßen Stellantriebes, wobei im Wesentlichen das Steckgetriebe dargestellt ist, das in der gezeigten Ausführungsvariante fünfstufig ausgebildet ist,
- Fig. 6: eine perspektivische Darstellung einer Detailansicht eines Stellantriebes mit einer dreistufigen Übersetzung,
- Fig. 7: eine Draufsicht auf ein Steckgetriebe einer Ausführungsvariante eines Stellantriebes, wobei hier wenigstens eine vierstufige Übersetzung gezeigt ist,
- Fig. 8: eine Draufsicht auf ein Steckgetriebe einer Ausführungsvariante eines Stellantriebes, wobei hier wenigstens eine dreistufige Übersetzung gezeigt ist,
- Fig. 9: eine Ausführungsvariante eines erfindungsgemäßen Stellantriebes mit einem Motor und einer Haltebremse in einer längs geschnittenen Darstellung,
- Fig. 10: eine perspektivische Ansicht des Längsschnitts des Stellantriebes aus Fig. 9,
- Fig. 11: eine weitere Ansicht des zuvor genannten Stellantriebes.

Nachfolgend werden mehrere Ausführungsvarianten eines erfindungsgemäßen Stellantriebes beschreiben, der im Ganzen jeweils als 1 bezeichnet ist.

Der Stellantrieb 1 kann mit einer Funktionseinheit, insbesondere mit einem Ventil, in eine Wirkverbindung versetzbar sein oder in Gebrauchsstellung in einer Wirkverbindung stehen.

Der Stellantrieb 1 weist dabei jeweils einen Motor 2 (Elektromotor) auf, der zum Beispiel als ein Synchronmotor oder Asynchronmotor ausgebildet sein kann.

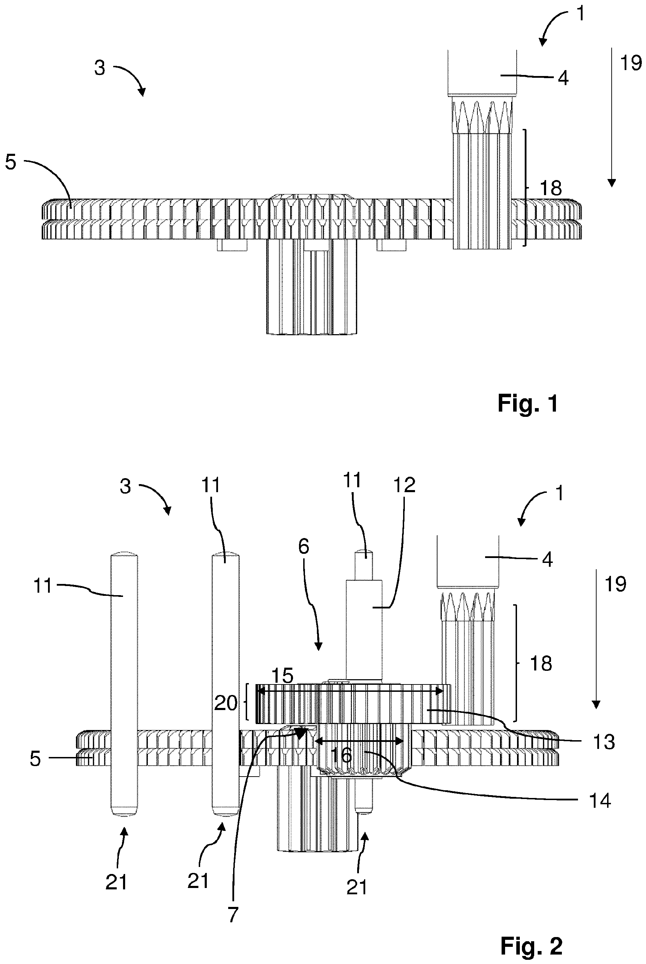

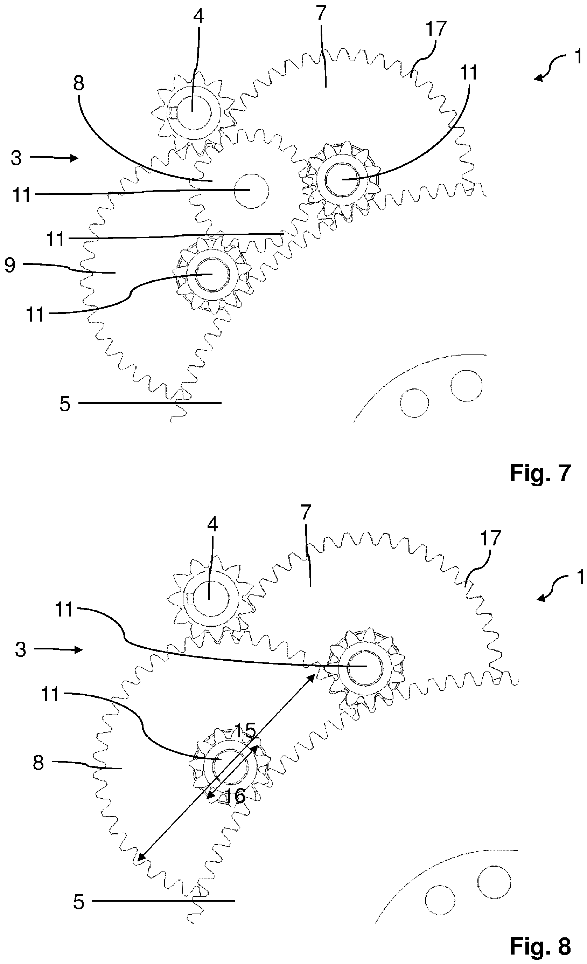

Bei den Ausführungsvarianten der Fig. 1 bis 8 liegt das Hauptaugenmerk auf einem Steckgetriebe 3, das nachfolgend ausführlich beschrieben ist.

Zur Herstellung eines geeigneten Steckgetriebes 3 steht einem Nutzer erfindungsgemäß ein Baukastensystem mit mehreren Getriebeteilen zur Verfügung, mit welchem ein an die jeweilige Anwendung angepasstes Steckgetriebe schnell und einfach herstellbar ist. Die Erfindung betrifft daher auch eine Verwendung zur Herstellung eines Baukastens, wie er hierin beschrieben und beansprucht ist. Auf das Baukastensystem wird nachfolgend ebenfalls noch genauer eingegangen.

Der Motor 2 des Stellantriebes 1 weist eine Motorwelle 4 auf, über welche ein vom Motor 2 erzeugtes Drehmoment auf eine Funktionseinheit und/oder eine mit der Motorwelle 4 verbundene oder verbindbare Abtriebswelle 33 übertragbar ist. Durch die oben beschriebene Wirkverbindung ist dann eine Kraftübertragung und/oder eine Drehmomentübertragung von der Abtriebswelle 33 auf die Funktionseinheit möglich.

Der Motor 2 weist eine A-Lagerseite 24 und eine B-Lagerseite auf. Als A-Lagerseite 24 wird allgemein eine Abtriebsseite des Motors 2 bezeichnet, an welcher die Motorwelle 4 aus dem Motorgehäuse herausgeführt ist und/oder an welcher eine Funktionseinheit und/oder Abtriebswelle 33 angebunden ist. Als B-Lagerseite wird somit die der A-Lagerseite abgewandte Seite des Motorgehäuses bezeichnet. In der Regel ist die B-Lagerseite als Lüfterseite ausgebildet.

Das Steckgetriebe 3 des Stellantriebes weist wenigstens ein Abtriebsrad 5 auf, dass entweder direkt oder indirekt, insbesondere durch dazwischen geschaltete Steckelemente 7, 8, 9, 10 mit der Motorwelle 4 in einer Wirkverbindung steht, also insbesondere direkt oder indirekt durch die Motorwelle 4 antreibbar ist.

Die Motorwelle 4 und das Abtriebsrad 5 können in axialer Richtung 19 (insbesondere bezogen auf eine Drehachse der Motorwelle 4 und/oder des Abtriebsrades 5 relativ zueinander verstellt werden. Dabei kann die Verstellung durch eine Positionsveränderung der Motorwelle 4 und/oder des Abtriebsrades 5 erfolgen. Das Abtriebsrad 5 kann auch als Abtriebswelle 33 ausgestaltet oder mit einer Abtriebswelle 33 gekoppelt sein.

Durch die zuvor beschriebene axiale Relativverstellung ist es möglich, zwischen der Motorwelle 4 und dem Abtriebsrad 5 Platz 6 (Bauraum) zu schaffen, in welchem wenigstens ein Steckelement 7, 8, 9, 10 anordenbar oder in Gebrauchsstellung angeordnet ist. Somit kann ein mehrstufiges Steckgetriebe 3 mit wenigstens einem Steckelement 7, 8, 9, 10 eingerichtet werden oder sein. Die axiale Relativverstellung kann dabei gerade soweit erfolgen, dass genügend Platz 6 ausgebildet ist, um je nach Anwendung die Anzahl von Steckelementen 7, 8, 9, 10 in erforderlicher Ausrichtung/Orientierung anordnen zu können, die für eine Einrichtung eines gewünschten Abtriebsmoments am Abtriebsrad 5 erforderlich sind. Damit kann eine besonders große Variabilität bei der Einstellung eines gewünschten Abtriebsmoments erreicht werden, da dessen Einstellung nicht oder nicht zwangsläufig über die Motordrehzahl erfolgt, sondern durch die gewählten Übersetzungsverhältnisse des Steckgetriebes 3. Derartig flexibel einstellbare Stellantriebe 1 und/oder Baukästen zur Ausbildung eines Steckgetriebes 3 bei Stellantrieben 1 sind bislang nicht erhältlich. Gleichzeitig ist es möglich, den erforderlichen Platzbedarf minimal zu halten, so dass besonders kompakte Stellantriebe 1 bereitstellbar sind.

Durch die Vielzahl unterschiedlicher Übersetzungen, die durch das Steckgetriebe 3 ausbildbar sind, ist es möglich, die Motordrehzahl nahezu konstant und/oder in einem optimalen Arbeitsbereich, in welchem ein optimaler Wirkungsgrad des Motors 2 vorliegt, einzustellen. Dadurch kann die Hitzeentwicklung reduziert werden.

Wie in Figur 1 gezeigt ist, kann das Steckgetriebe 3 lediglich einstufig ausgestaltet sein, so dass das Abtriebsrad 5 beim Betrieb des Stellantriebes 1 direkt durch die Motorwelle 4 angetrieben wird, insbesondere direkt gekämmt wird.

In den Fig. 2 bis 5 sind jeweils mehrstufige Ausführungen des Steckgetriebes 3 gezeigt. Die Anzahl der Stufen ist dabei durch die Anzahl der zwischen der Motorwelle 4 und dem Abtriebsrad 5 dazwischen geschalteten Steckelemente 7, 8, 9, 10 bestimmt.

Jedes Steckelement 7, 8, 9, 10 weist wenigstens ein Zahnrad 13, 14 auf. Es kann jedoch auch vorgesehen sein, dass einzelne oder alle Steckelemente 7, 8, 9, 10 je mehrere Zahnräder 13, 14 zur Übertragung eines Drehmoments auf andere Zahnräder und/oder das Abtriebsrad 5 aufweisen. Diese Steckelemente 7, 8, 9, 10 können in zwei verschiedenen Orientierungen angeordnet sein oder werden.

Die Steckelemente 7, 8, 9, 10 können, wie in den Figuren 1 bis 6 zu erkennen ist, auf Bolzen 11 montiert, insbesondere aufgesteckt sein oder werden. Eine axiale Fixierung kann beispielsweise durch einen Formschluss und/oder Reibschluss und/oder durch eine ebenfalls auf dem selben Bolzen 11 aufgezogene Distanzhülse 12 erfolgen. Durch die Länge der Distanzhülse 12 kann somit eine axiale Position eines Steckelements 7, 8, 9, 10 entlang des Bolzens 11 definiert sein.

Der Stellantrieb 1 kann mehrere Bolzen 11 aufweisen, auf welchem jeweils ein oder mehrere Steckelemente 7, 8, 9, 10 anordenbar und/oder fixierbar sind. Die Bolzen 11 können fest vormontiert sein, beispielsweise auf einer Montageeinheit mit einem Einführbereich. Es ist jedoch auch eine Ausgestaltung möglich, bei welcher der Nutzer die Bolzeneinführplätze 21 für die einzelnen Bolzen 11 frei wählen kann.

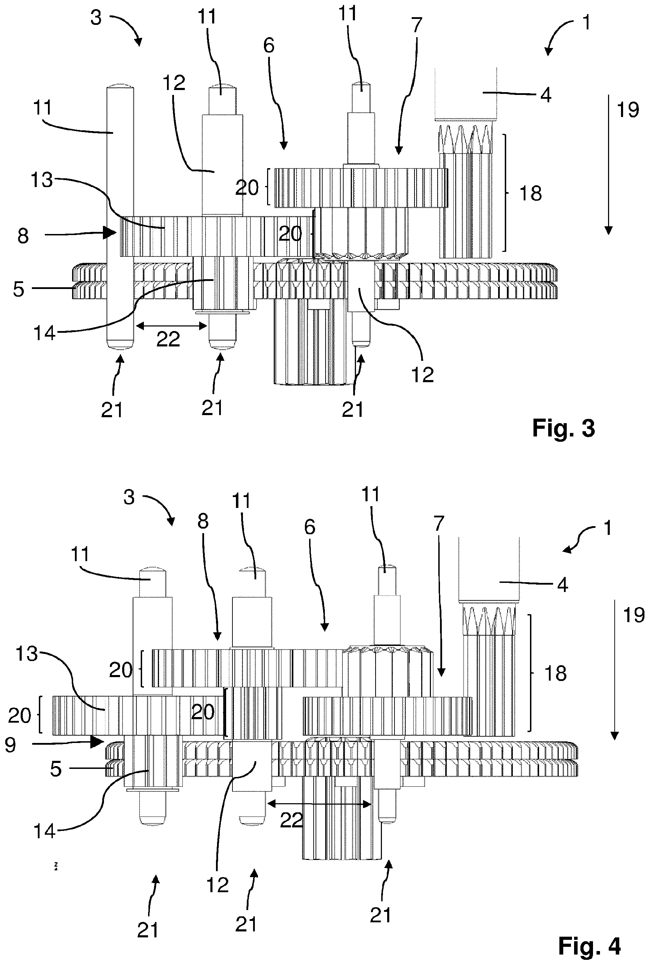

Das Steckgetriebe 3 kann, wie in den Fig. 3 bis 6 gezeigt ist, mehrere Steckelemente 7, 8, 9, 10, die in axialer Richtung 19 zueinander versetzt und/oder auf gleicher Höhe angeordnet sind, aufweisen. Die Steckelemente 7, 8, 9, 10 können dabei seitlich versetzt zueinander angeordnet sein. Alternativ oder ergänzend dazu können wenigstens zwei Steckelemente 7, 8, 9, 10 axial versetzt auf einem Bolzen 11 angeordnet sein, so dass deren Drehachsen identisch sind.

Die in den Fig. 1 bis 8 gezeigten Ausführungsvarianten weisen jeweils Steckelemente 7, 8, 9, 10 mit je zwei Zahnrädern 13, 14 auf. Dabei weisen die zwei Zahnräder 13, 14 eines Steckelements 7, 8, 9, 10 unterschiedliche Durchmesser auf. Dies hat den Vorteil, dass derartige Steckelemente 7, 8, 9, 10 in zwei unterschiedlichen Orientierungen einsetzbar sind, so dass dadurch verschiedene Übersetzungen ausgebildet werden können. Ferner weist diese Ausgestaltung den Vorteil auf, dass zur Ausbildung unterschiedlicher Übersetzungen nicht mehrere unterschiedliche Getriebeteile gebraucht werden. Dadurch können die Herstellungskosten reduziert werden.

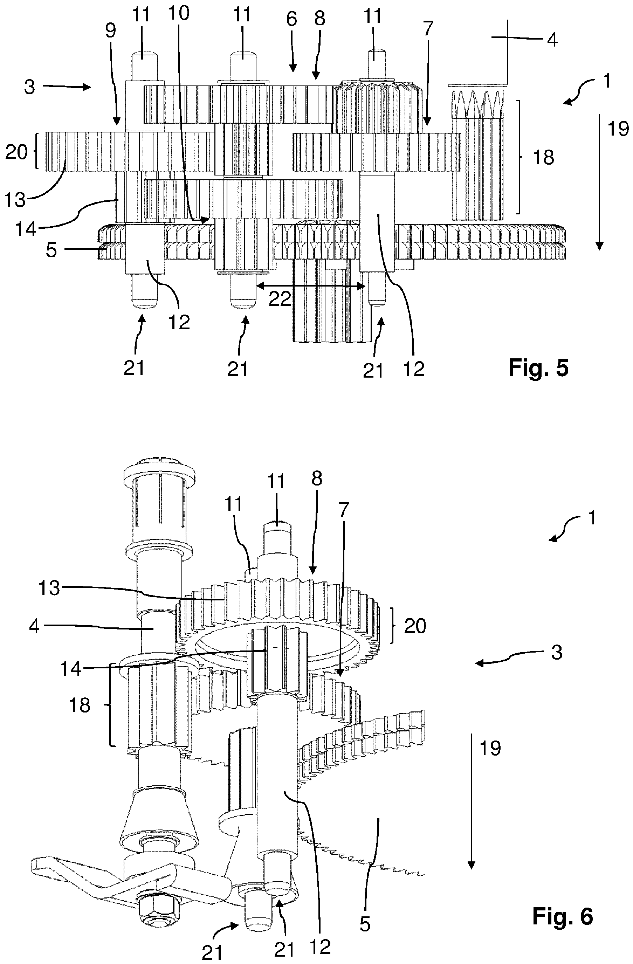

Das Steckgetriebe 3 kann Steckelemente 7, 8, 9, 10 aufweisen, die baugleich ausgebildet sind, wie in den Fig. 4 und 5 gezeigt ist. Dabei kann zum Beispiel die Orientierung und/oder die axiale Position der insbesondere baugleichen Steckelemente 7, 8, 9, 10 variieren.

Die Motorwelle 4 weist einen Kämmbereich 18 auf, der in Gebrauchsstellung entweder direkt mit dem Abtriebsrad in Eingriff gebracht ist oder mit dazwischen angeordneten Zahnrädern von Steckelementen 7, 8, 9, 10. Dadurch ist eine Drehmomentübertragung von der Motorwelle 4 auf das Abtriebsrad 5 und/oder die Zahnräder 13, 14 der Steckelemente 7, 8, 9, 10 möglich.

Der Kämmbereich 18 der Motorwelle 4 ist in axialer Richtung 19 länger ausgebildet als die Kämmbereiche 20 der Zahnräder 13, 14 der Steckelemente 7, 8, 9, 10. Somit ist es möglich, die Motorwelle 4 trotz einer axialen Verstellung des Steckgetriebes 3 und/oder der Motorwelle 4 stets in Eingriff mit einem Zahnrad 13, 14 und/oder dem Abtriebsrad 5 zu bringen.

Ein Abstand 22 zwischen den Bolzeneinführplätzen 21 ist jeweils kleiner ausgebildet als ein Durchmesser, insbesondere ein Radius, eines kleinsten Zahnrades 13, 14 eines Steckelements 7, 8, 9, 10. Somit kann eine besonders platzsparende Anordnung der Getriebeteile erreicht werden.

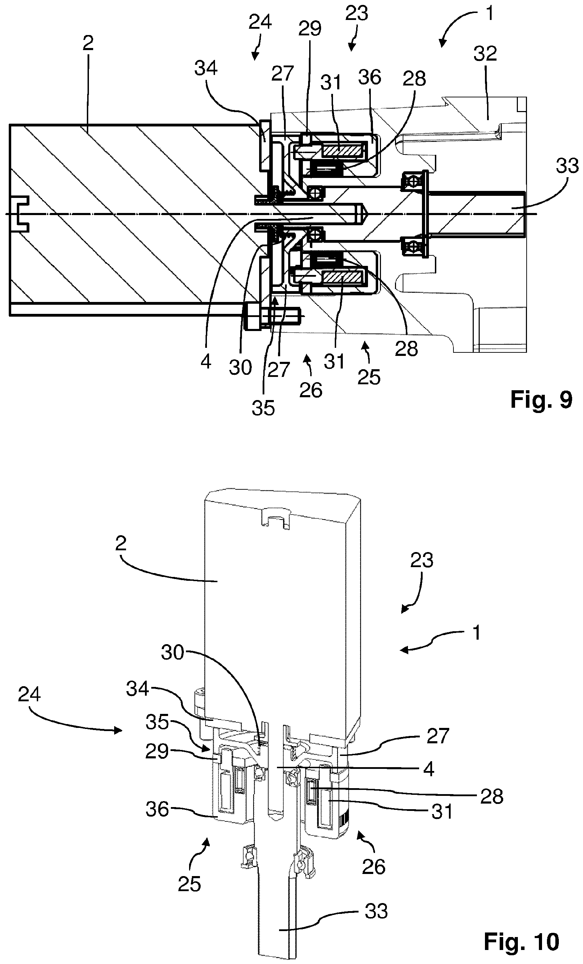

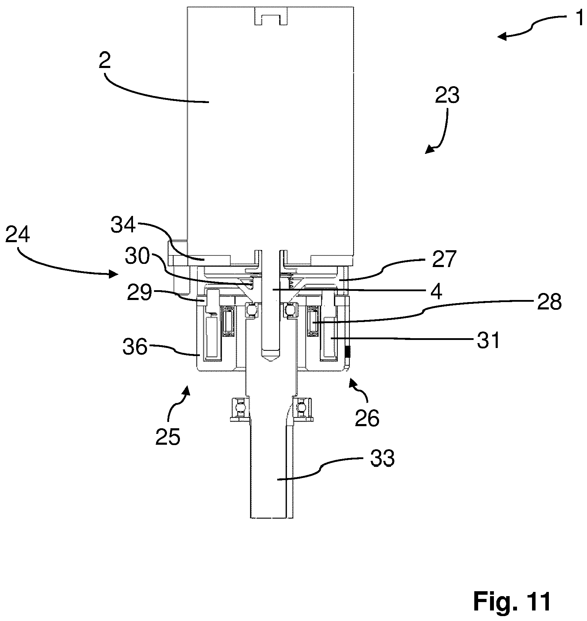

Bei den Ausführungsvarianten aus den Fig. 9 bis 11 liegt das Hauptaugenmerk auf einem Stellantrieb 1 mit einem Motor 2 und einer Haltebremse 23. Die Haltebremse 23 kann zum Beispiel als eine Sicherheitsbremse, insbesondere als eine Federdruckbremse ausgebildet sein.

Die Haltebremse 23 weist wenigstens zwei Druckfedern 28 auf, durch welche eine Bremskraft erzeugbar ist. Das Bremsmoment wird dabei in einem stromlosen Zustand der Haltebremse 23 erzeugt. Das Lüften der Bremse 23 erfolgt bei der dargestellten Ausführungsvariante elektromagnetisch.

Die Haltebremse 23 weist die Besonderheit auf, dass sie an der A-Lagerseite 24 des Motors 2 angeordnet ist und in einer direkten Wirkverbindung mit einer abzubremsenden Abtriebswelle 33 steht.

Die Abtriebswelle 33 ist mit der durch den Motor 2 angetriebenen Motorwelle 4 verbunden. Kommt es zu einer Beschädigung der Verbindung zwischen Motorwelle 4 und Abtriebswelle 33 kann mit Hilfe der Haltebremse 23 weiterhin ein Abbremsen und/oder Halten der Abtriebswelle erreicht werden. Bei einer Anordnung der Haltebremse 23 an der B-Lagerseite wäre dies hingegen nicht möglich, da hier nur ein indirektes Bremsen/Halten der Abtriebswelle 33 durch Halten/Abbremsen der Motorwelle 4 erfolgen kann.

Im stromlosen Zustand drücken die Druckfedern 28 den wenigstens einen Anker 29 gegen die Bremsscheibe 27 und/oder die Bremsscheibe 27 gegen einen Motorflansch 34. Dadurch kommt es zu einem Reibschluss, durch welchen ein Bremsmoment erzeugt wird und die Abtriebswelle 33 abgebremst oder gehalten wird.

Im bestromten Zustand, insbesondere bei Anlegen einer Gleichspannung, an eine Erregerwicklung 31 entsteht ein Magnetfeld, durch dessen Magnetkraft der Anker 29 entgegen der Federkraft der Druckfedern 28 zurückgestellt wird, so dass zwischen dem Anker 29 und der Bremsscheibe 27 und/oder zwischen der Bremsscheibe 27 und dem Motorflansch 34 jeweils ein Luftspalt 35 entsteht. In diesem Zustand spricht man von einer belüfteten Bremse 23.

Die an der Abtriebswelle 33 drehfest angeordnete Bremsscheibe 27 wird somit im bestromten Zustand freigegeben und kann sich anschließend zusammen mit der Abtriebswelle 33 drehen.

Kommt es zu einer Störung oder einem Stromausfall wird durch die vorgespannten Druckfedern 28 unmittelbar ein Bremsmoment erzeugt bzw. bei Stillstand der Abtriebswelle 33 eine Haltekraft übertragen.

Der Stellantrieb 1 umfasst weiter eine Erfassungseinrichtung 25 zur Bestimmung einer Rotationsgeschwindigkeit der Abtriebswelle 33. Die Haltebremse 23 des Stellantriebs 1 kann dazu eingerichtet sein, dass eine Bremssteuerung 26 aktivierbar ist oder aktiviert wird, wenn durch die Erfassungseinrichtung 25 ein Erreichen oder eine Unterschreitung einer Zielrotationsgeschwindigkeit vermeldet wird. Dies hat den Vorteil, dass bei einer Rotation der Abtriebswelle 33 diese zunächst durch ein vom Motor 2 erzeugtes Bremsmoment abgebremst wird, bevor ein durch die Bremse 23 erzeugtes Bremsmoment auf die Abtriebswelle 33 wirkt. Somit kann die Haltebremse 23 kleiner als übliche Bremsen zum vollständigen Abbremsen einer Abtriebswelle 33 ausgebildet werden. Zudem kann der Verschleiß der Bremse 23 auf diese Weise verringert werden, da die durch den oben beschriebenen Reibschluss entstehende Wärme geringer ist.

Die Erfindung betrifft also insbesondere einen Stellantrieb 1 mit einem Baukasten zur Ausbildung eines Steckgetriebes 3, wobei der Baukasten wenigstens ein Abtriebsrad 5 und wenigstens ein Steckelement 7, 8, 9, 10 aufweist, wobei durch den Baukasten ein Steckgetriebe 3 mit einer bis fünf Stufen ausbildbar ist, wie hierin beschrieben und beansprucht.

### Bezugszeichenliste

- 1: Stellantrieb
- 2: Motor
- 3: Steckgetriebe
- 4: Motorwelle
- 5: Abtriebsrad
- 6: Platz zwischen der Motorwelle und dem Abtriebsrad, Bauraum in axialer Richtung
- 7: Erstes Steckelement
- 8: Zweites Steckelement
- 9: Drittes Steckelement
- 10: Viertes Steckelement
- 11: Bolzen
- 12: Distanzhülse
- 13: Erstes Zahnrad
- 14: Zweites Zahnrad
- 15: Durchmesser des ersten Zahnrads
- 16: Durchmesser des zweiten Zahnrads
- 17: Zähne
- 18: Kämmbereich der Motorwelle
- 19: Axiale Richtung
- 20: Kämmbereich eines Zahnrades eines Steckelements
- 21: Bolzeneinführposition
- 22: Abstand zwischen zwei benachbarten Bolzeneinführpositionen
- 23: Haltebremse
- 24: A-Lagerseite
- 25: Erfassungseinrichtung
- 26: Bremssteuerung
- 27: Bremsscheibe
- 28: Druckfeder
- 29: Anker
- 30: Rückholfeder
- 31: Erregerwicklung
- 32: Gehäuse
- 33: Abtriebswelle
- 34: Motorflansch
- 35: Luftspalt
- 36: Magnetgehäuse

## Patentansprüche

1. **Stellantrieb** (1) mit einem Motor (2), insbesondere einem Synchronmotor, und einem Steckgetriebe (3).

2. Stellantrieb (1) nach Anspruch 1, **dadurch gekennzeichnet, dass** eine Motorwelle (4) und ein Abtriebsrad (5) des Steckgetriebes (3) relativ zu einander axial verstellbar sind, insbesondere wobei dadurch wenigstens zwei unterschiedliche Stellungen einrichtbar sind.

3. Stellantrieb (1) nach Anspruch 1 oder 2, **dadurch gekennzeichnet, dass** in wenigstens einer Stellung Platz (6) zwischen der Motorwelle (4) und dem Abtriebsrad (5) für wenigstens ein Steckelement (7, 8, 9, 10) vorliegt.

4. Stellantrieb (1) nach einem der vorstehenden Ansprüche, **dadurch gekennzeichnet, dass** das wenigstens eine Steckelement (7, 8, 9, 10) auf wenigstens einen Bolzen (11), vorzugsweise fest vormontierten Bolzen (11), befestigbar oder in Gebrauchsstellung befestigt ist.

5. Stellantrieb (1) nach einem der vorstehenden Ansprüche, **dadurch gekennzeichnet, dass** das wenigstens eine Steckelement (7, 8, 9, 10) durch zumindest eine Distanzhülse (12) in einer axialen Position entlang eines Bolzens (11) befestigbar oder befestigt ist, vorzugsweise wobei wenigstens zwei Steckelemente (7, 8, 9, 10) axial versetzt zueinander angeordnet sind.

6. Stellantrieb (1) nach einem der vorstehenden Ansprüche, **dadurch gekennzeichnet, dass** zwischen der Motorwelle (4) und dem Abtriebsrad (5) zwei Steckelemente (7, 8, 9, 10), insbesondere wenigstens drei Steckelemente (7, 8, 9, 10), insbesondere wenigstens vier Steckelemente (7, 8, 9, 10), insbesondere wenigstens fünf Steckelemente (7, 8, 9, 10) oder mehr, angeordnet sind.

7. Stellantrieb (1) nach einem der vorstehenden Ansprüche, **dadurch gekennzeichnet, dass** wenigstens ein Steckelement (7, 8, 9, 10) zwei Zahnräder (13, 14) mit unterschiedlichen Durchmessern (15, 16) aufweist, insbesondere wobei das wenigstens eine Steckelement (7, 8, 9, 10) in zwei unterschiedlichen Orientierungen befestigbar ist.

8. Stellantrieb (1) nach einem der vorstehenden Ansprüche, **dadurch gekennzeichnet, dass** ein in Umfangsrichtung umlaufender und/oder Zähne (17) aufweisender Kämmbereich (18) der Motorwelle (4) in axialer Richtung (19) länger ausgebildet ist als ein Kämmbereich (20) eines Zahnrades (13, 14) des wenigstens einen Steckelements (7, 8, 9, 10), insbesondere dass der Kämmbereich (18) der Motorwelle (4) in axialer Richtung (19) jeweils länger ausgebildet ist als die Kämmbereiche (20) der Zahnräder (13, 14) aller Steckelemente (7, 8, 9, 10).

9. Stellantrieb (1) nach einem der vorstehenden Ansprüche, **dadurch gekennzeichnet, dass** ein Einführbereich der Bolzen (11) wenigstens zwei Bolzeneinführplätze (21) aufweist, wobei ein Abstand (22) zwischen den Bolzeneinführplätzen (21) kleiner als ein Durchmesser eines kleinsten Zahnrades (13, 14) ist, insbesondere kleiner als ein Radius eines kleinsten Zahnrades (13, 14) ist.

10. Stellantrieb (1) nach einem der vorstehenden Ansprüche, **dadurch gekennzeichnet, dass** auf wenigstens einem Bolzen (11) wenigstens zwei Steckelemente (7, 8, 9, 10) angeordnet sind.

11. **Stellantrieb** (1) mit einem Motor (2) und einer Haltebremse (23), insbesondere nach einem der vorstehenden Ansprüche, **dadurch gekennzeichnet, dass** die Haltebremse (23) auf einer A-Lagerseite (24) des Motors (2) angeordnet ist.

12. Stellantrieb (1) nach Anspruch 11, **dadurch gekennzeichnet, dass** eine Abtriebswelle (33) an der A-Lagerseite (24) mit einer Funktionseinheit, insbesondere mit einem Ventil, in eine Wirkverbindung versetzbar ist oder in Gebrauchsstellung in einer Wirkverbindung steht, so dass eine Kraftübertragung und/oder eine Drehmomentübertragung von der Abtriebswelle (33) auf die Funktionseinheit möglich ist.

13. Stellantrieb (1) nach Anspruch 11 oder 12, **dadurch gekennzeichnet, dass** die Haltebremse (23) im unbestromten Zustand bremst und im bestromten Zustand lüftet.

14. **Stellantrieb** (1) nach dem Oberbegriff aus Anspruch 1 oder 13 oder nach einem der vorstehenden Ansprüche, **dadurch gekennzeichnet, dass** der Stellantrieb (1) eine Erfassungseinrichtung (25) zur Bestimmung einer Rotationsgeschwindigkeit einer oder der Abtriebswelle (33) aufweist, wobei die Haltebremse (23) des Stelleintriebs (1) durch eine Bremssteuerung (26) aktivierbar ist oder aktiviert wird, wenn durch die Erfassungseinrichtung (25) ein Erreichen oder eine Unterschreitung einer Zielrotationsgeschwindigkeit vermeldet wird.

15. **Verfahren** zur Ansteuerung einer Bremse (23) eines Stellantriebes (1), insbesondere eines Stellantriebes (1) nach einem der vorstehenden Ansprüche, wobei eine durch die Bremse (23) feststellbare Abtriebswelle (33) erst nach einem motorischen Abbremsen der Abtriebswelle (33) bis zu einem Erreichen oder Unterschreiten einer Zielrotationsgeschwindigkeit der Abtriebswelle (33) festgestellt wird.
